## Europäisches Patentamt
## European Patent Office
## Office européen des brevets

(11) Publication number: **0 060 316**
**B1**

(12) **EUROPEAN PATENT SPECIFICATION**

(45) Date of publication of patent specification: **17.07.85**

(51) Int. Cl.⁴: **E 04 F 17/02**

(21) Application number: **81105786.8**

(22) Date of filing: **22.07.81**

(54) Prefabricated double-walled metal chimney.

(30) Priority: **16.03.81 US 244033**

(43) Date of publication of application:
**22.09.82 Bulletin 82/38**

(45) Publication of the grant of the patent:
**17.07.85 Bulletin 85/29**

(84) Designated Contracting States:
**AT BE CH DE FR GB IT LI LU NL SE**

(56) References cited:
**GB-A-1 181 975**

(73) Proprietor: **HOUSEHOLD MANUFACTURING, INC.**
**2700 Sanders Road**
**Prospect Heights Illinois 60070 (US)**

(72) Inventor: **Stone, Richard L.**
**12271 Windsor Court**
**Los Altos California 94022 (US)**

(74) Representative: **Howden, Christopher Andrew et al**
**FORRESTER & BOEHMERT Widenmayerstrasse 4/I**
**D-8000 München 22 (DE)**

Courier Press, Leamington Spa, England.

## Description

This invention relates to an improved prefabricated metal chimney of the type comprised of a plurality of similar chimney sections connectable in an end-to-end relationship, and to a chimney section for such a chimney.

Prefabricated chimneys comprising a plurality of similar sections each comprising a metal inner wall or pipe, and a concentric metal outer wall or pipe, with insulation between the inner and outer walls, have been widely used the past because of their inherent advantages over conventional masonry chimneys, including their economy and ease of installation. Despite the relatively high state of development of such chimney structures as exemplified by U.S. Patents Nos. 4,029,344, 4,029,343 and 3,902,744, certain problems have led to an increased need for improvements. One problem which arose was that of preventing or at least reducing to a minimum the conduction of heat from the inner pipe to the outer pipe while also maintaining the necessary structural integrity at the ends of each chimney section and thus at the joints between connected sections. The use of metal end caps or annular flanges on each section in previous prefabricated chimneys provided adequate structural integrity but also created a natural path for heat conduction from the inner to the outer pipe and often cased hot spots on the outer surface of an erected chimney.

GB—A—1181975 discloses a prefabricated double-walled chimney comprising a plurality of sections to be interconnected. Each section has a cylindrical inner imperforate wall member, and a cylindrical outer wall member having a greater diameter than and spaced radially outwardly from said inner wall member, thereby forming an annular cavity for a quantity of insulation material between the inner and outer wall members. Each section has a male coupling means at one end of the section and a female coupling means at the other end of the section. The female coupling means defines a recess that is effectively defined between spaced apart end portions of the wall members by means of an appropriately configured end cap which constitutes an annular retainer member extending between the spaced apart end portions of the wall members and acts to hold the insulation material in place between the inner and outer wall members. The described annular retainer member is formed of metal and is broken only by a series of relatively small apertures provided for ventilation purposes. The retainer member is held in place by means provided on the outer wall member, in the form of a rolled joint. This prior arrangement exemplifies the use of metal end caps which provide a path for the conduction of heat from the inner to the outer pipe.

One object of the present invention is to minimize this problem and provide a more efficient and long-lasting prefabricated chimney comprising interconnected chimney sections.

Another problem with prefabricated metal chimneys formed with interconnected prefabricated chimney sections was that of forming and maintaining an adequate gas seal at the joints between such sections. In previous chimney designs the mating end couplings of the chimney sections comprised primarily metal parts that not only conducted a large amount of heat but also tended to create gaps or channels due to normal mismatching tolerances of components which were often increased by the expansion and contraction of such components as a result of temperature changes. The escape of gas through such joint gaps or channels could become intolerable for most chimney installations.

In the arrangement shown in GB—A—1181957 a sealing gasket is provided between the end of the male coupling means and the base of the female coupling means. The gasket is a relatively large annular gasket and the male coupling means will have to be brought into firm engagement with the gasket over the entire area of the gasket if an adequate seal is to be provided.

According to one aspect of this invention there is provided a prefabricated double-walled chimney section adapted to be connected to a similar section in a chimney column, said section comprising: a cylindrical inner imperforate wall member; a cylindrical outer wall member having a greater diameter than and spaced radially outwardly from said inner wall member, thereby forming an annular cavity for a quantity of insulation material between said inner and outer wall members; male coupling means at one end of said section; female coupling means at the other end of said section including a recess defined between spaced apart end portions of said wall members for receiving said male coupling means, an annular retainer member extending between said spaced apart end portions for holding said insulation in place between said inner and outer wall members, and means in said outer wall member for holding said retainer member against the end of the insulation material between said wall members, wherein said male coupling means include a plurality of relatively narrow and rigid structural members attached to and extending between end portions of said inner and outer wall members, and wherein said annular retainer member is partially movable and is made of a material relatively low heat conductivity.

Preferably said annular retainer member is made of a flexible material.

Advantageously at least a major part of said annular retainer member for said female coupling is of such a constitution as to be normally consumed by heat present in said insulation material during normal operation of a chimney incorporating said chimney section.

Preferably said male coupling includes an annular metal spider having inner and outer portions fixed to the upper edges of said inner and outer wall members respectively.

Preferably said male coupling further comprises an annular wafer of this non-metallic material adjacent the underside of said narrow structural members to help retain said insulation material within said section. Preferably said annular wafer is made of a material of such a constitution as to be normally consumed by heat present in said insulation material during normal operation of the chimney.

According to another aspect of this invention there is provided a chimney installation comprising: a plurality of prefabricated chimney sections connected end-to-end and supported by adjacent building structure, each of said sections comprising: an inner wall and an outer wall spaced outwardly therefrom and forming an annular cavity filled with insulation material; a male coupling at one end of each section; a female coupling at the other end of each section having an annular retainer member covering said insulation material; said male coupling of each chimney being seated within the female coupling of the next adjacent section at each junction of two aligned sections, characterised in that said male coupling includes a plurality of relatively narrow structural members fixed to and extending between the end edges of said inner and outer walls, said annular retainer member being of a material of relatively low heat conductivity, said male coupling being situated so that said narrow structural members of the male coupling are directly adjacent the annular retainer member of said female coupling whereby a path of relatively low heat conducting capacity, afforded principally by said narrow spaced apart structural members, is provided for the flow of heat from the inside wall of the chimney to its outside wall.

A preferred embodiment of the invention has the advantage that, since the said annular retainer member is movable, and is preferably also flexible, when the male and female end portions of adjoining chimney sections are connected together, the further insulation material in both sections will become packed closely together to provide continuity of insulation, and good gas sealing at all chimney section joints. After the chimney sections of such a preferred embodiment are installed the retainer members of the female section as well as the annular retainer wafer of the male section, which is preferably made of a material which is of a constitution as to be normally consumed by heat present in the insulation material during normal operation of a chimney, may become substantially dissolved or consumed by the normal heat generated within the chimney in use. This enables the insulation material of adjoining sections which are normally compressed within the relative sections, to merge even closer together around the relatively narrow and rigid structural members extending between the inner and outer wall members, thus substantially forming a continuous insulation body extending between the adjoining chimney sections, thus ensuring an effective gas seal.

Further embodiments of the invention are disclosed in dependent claims 2, 6 and 8 to 10.

It will be understood that a preferred prefabricated, double-walled chimney in accordance with the invention will, at least after a period of use, have a substantially continuous insulation between the inner and outer walls of the chimney, there being a minimum of heat conductive structural elements extending between the walls at the section joints. In the preferred embodiment the insulation is packed in a compressed form and is retained by the annular retainer member, the insulation material expanding to provide a gas seal to minimise escape of chimney gases when the annular retainer member is dissolved or consumed by the normal heat generator within the chimney.

The assembly defining the said plurality of relatively narrow and rigid structural members can be fabricated without the waste of material in the form of a wire mesh or in the form of a structure formed from a single bent wire. The assembly may have the advantage of positioning the inner pipe relative to the outer pipe without imposing thermal expansion stresses which might cause damage at high operation temperatures.

In a preferred embodiment of the invention the outer pipes and the inner pipes are firmly connected to each other at each joint, and thus one load bearing outer pipe section is directly connected to the next outer pipe section and will transmit compressive thrust loads directly. This arrangement will also provide strength in loading when the chimney is cantilevered horizontally and will provide tensile low transfers when the chimney is suspended from above.

It is to be understood that a prefabricated chimney in accordance with a preferred embodiment of the invention is well adapted for ease and economy of manufacture.

Embodiments of the invention are described below by way of example with reference to the accompanying drawings, in which:

FIGURE 1 is a view in elevation showing a portion of a prefabricated chimney comprised of a plurality of interconnected sections embodying the present invention;

FIGURE 2 is a view in section taken along the line 2—2 of Figure 1;

FIGURE 3 is a view in elevation of one chimney section according to the invention with portions broken away to disclose portions in section;

FIGURE 4 is a fragmentary view in vertical section showing a bottom closure for the chimney of Figure 1;

FIGURE 5 is a fragmentary end view taken along line 5—5 of Figure 7 showing one form of the male coupling end of a chimney section embodying the invention;

FIGURE 6 is a fragmentary end view taken along line 6—6 of Figure 7 showing the female coupling end of the chimney section;

FIGURE 7 is an enlarged fragmentary and exploded view in section showing portions of adjoining chimney sections just before being connected;

FIGURE 8 is an enlarged fragmentary view in section showing portions of the adjoining chimney sections of Figure 7 just after being connected; and

FIGURE 9 is a fragmentary view of a connecting band for two adjoining chimney sections taken partly in section along line 9—9 of Figure 8;

FIGURE 10 is a fragmentary and exploded view in section showing portions of adjoining chimney sections embodying the invention before being connected and having a modified form of male end coupling;

FIGURE 11 is a fragmentary view similar to Figure 10, but showing the adjacent chimney sections connected;

FIGURE 12 is an end view taken along line 12—12 of Figure 10 and showing a modified spider construction in a chimney section embodying the invention;

FIGURE 13 is a fragmentary view in vertical section showing a male end portion of a chimney section with another modified form of spider construction; and

FIGURE 14 is a fragmentary end view at reduced scale taken along line 14—14 of Figure 13;

FIGURE 15 is a fragmentary view in section of a modified form of female end for a chimney section embodying the invention; and

FIGURE 16 is a fragmentary view in section of another modified form of female end for a chimney section embodying the invention.

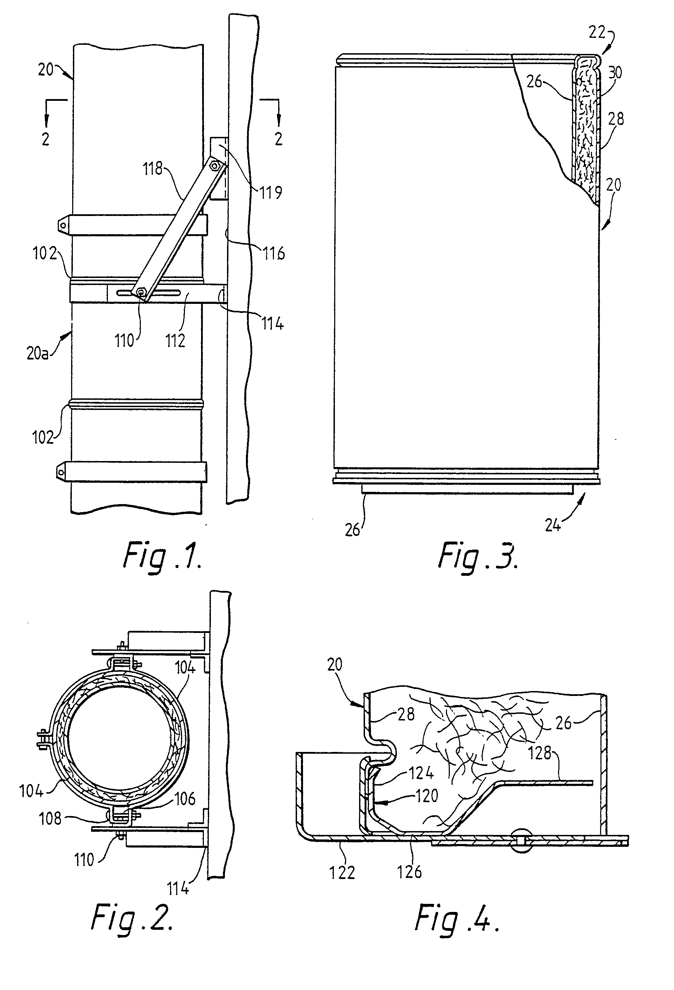

With reference to the drawings, Figures 1 and 2 show a portion of an assembled metal chimney comprised of a series of interconnected prefabricated chimney sections 20 embodying the principles of the present invention. The assembled chimney may have any desired number of sections and it may be supported by a suitable system of external brackets or the like which can be attached to surrounding building structure.

As shown in Figure 3, each chimney section has a generally cylindrical shape with a male coupling 22 at one end and a female coupling 24 at its opposite end. It has a cylindrical inner wall 26 and an outer wall 28 spaced outwardly therefrom to form an annular cavity which is filled with a suitable insulation material 30 such as mineral wool.

At the female end of each chimney section, the inner and outer wall members are somewhat further apart than at the male coupling end, the arrangement being such that the inner and outer walls at the male coupling end of one chimney section can fit snugly within the annular space defined between the inner and outer walls at the female end of an identical chimney section.

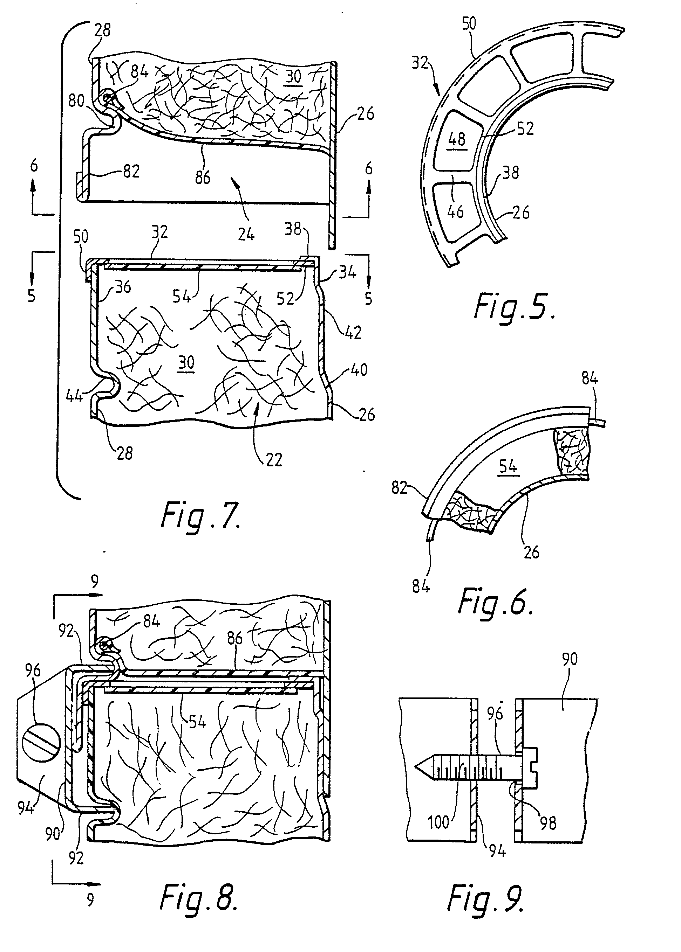

In the embodiment shown in Figures 5 to 7, the male coupling 22 is formed by an annular shaped spider member 32 that bridges across and between upper end portions 34 and 36 of the inner and outer wall members respectively. The upper end portion 34 of the inner wall member includes a radially extending flange portion 38. Spaced downward from the upper end portion 34 is a shoulder 40 that forms a short end wall portion 42 having a slightly greater diameter than that of the main portion of this inner wall member 26.

Spaced below the edge of the upper end portion 36 of the outer wall member 28 is an annular indentation or groove 44. In this embodiment the top edges 34 and 36 of both inner and outer walls are interconnected by the annular spider member 32. As shown in Figure 5, the spider member has spaced apart and relatively narrow radial spoke members 46 between which are openings 48 of substantially greater width. The outer ends of the spider spokes 46 are connected by an integral annular flange 50 that is bent at a right angle so that it will fit around and be spot welded to the outer edge of the upper end portion 36 of the outer wall. The inner ends of the spider spokes are connected to an integral flange 52 that fits under and is spot welded to the flange 38 of the inner wall end portion 34. The spider member 32 is preferably made of relatively thin sheet metal having a uniform thickness (e.g. 0.3 mm (0.012 inches)) and the spoke members 46 are only wide enough to afford the necessary strength and rigidity required for the chimney section. For example, for chimney sections having an outside diameter of around 30.5 cm (12 inches), 12 spokes having a width of around 6.4 mm (0.25 inches) are sufficient. These thin and narrow spokes are thus comprised of a relatively small amount of metal and do not allow a high rate of heat conduction from the inner wall to the outer wall. Adjacent to the underside of the spider is a thin annular wafer 54 of nonmetallic material such as a suitable plastic that covers the openings 48 between spoke members 46 and temporarily closes the annular male coupling. Once the male end coupling is formed with the spider member 32 and wafer 54 in place, the insulation material 30 for the chimney can be installed from the other end of the chimney section.

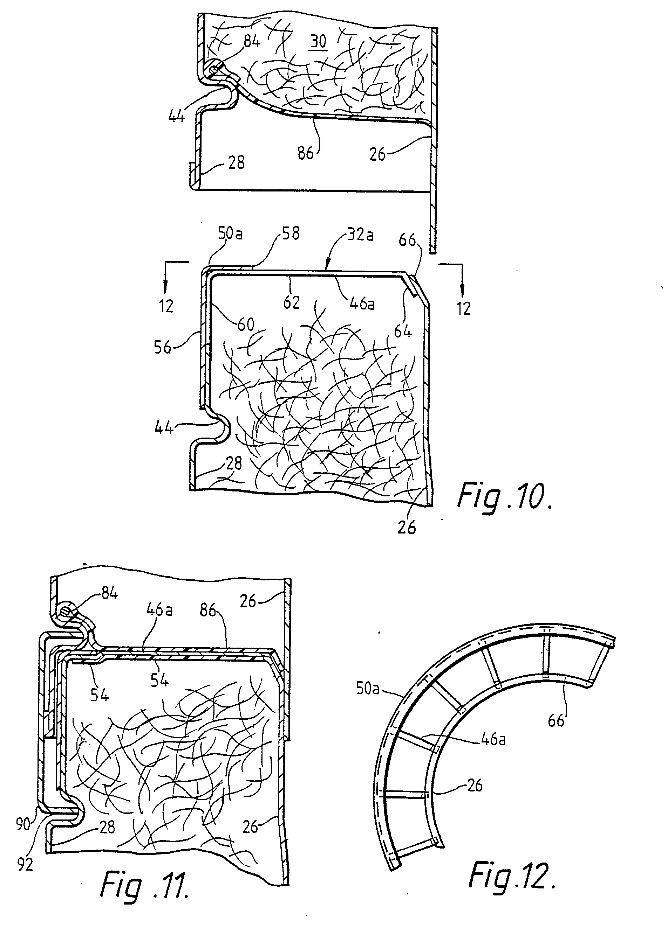

In another embodiment of the invention a spider member 32a may be constructed somewhat differently, as shown in Figures 10 to 12, by forming a single annular outer ring 50a with individual or integrally formed circumferentially spaced apart fingers 46a extending radially inwardly therefrom. As shown in Figure 10, the outer ring 50a has a right angular cross section formed by a vertical or cylindrical portion 56 integral with an annular, horizontal portion 58 extending inwardly from its upper end. Each finger 46a has an outer vertical flange portion 60 and an inner downwardly sloping flange portion 64. The outer vertical flange portion fits inside the outer ring against its vertical portion 56 and is spot welded or otherwise secured to it. The inner flange portion 64 of each finger lies flush against an upwardly sloping annular flange portion 66 forming the upper edge of the inner wall member 26 and these flange portions are also spot welded or otherwise secured together. This structural arrangement is particularly adaptable for conventional sheet metal materials having no surface treatment that would prevent or inhibit spot welding.

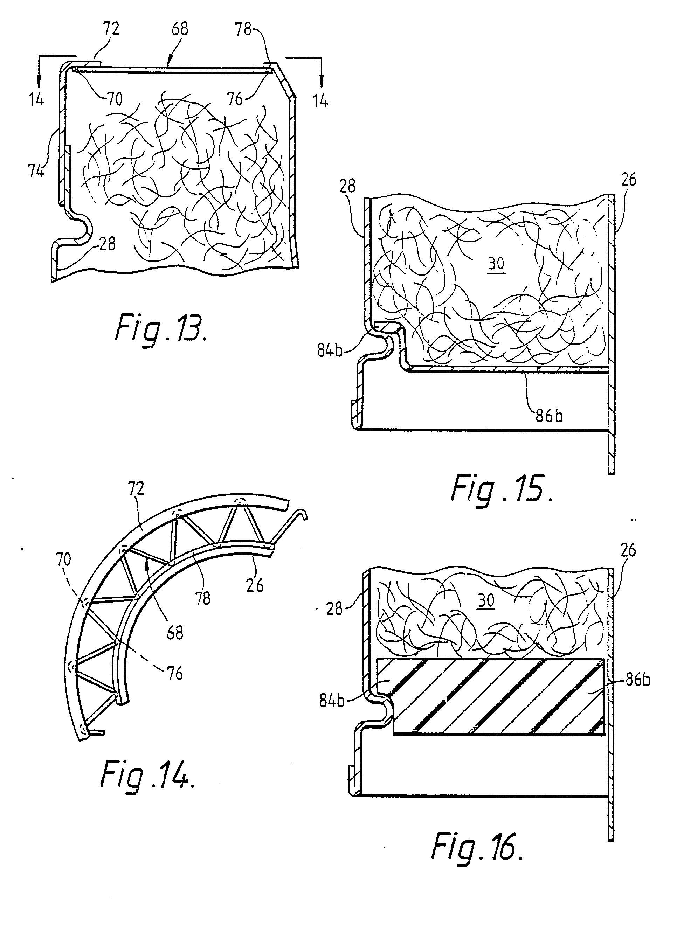

In lieu of the individual spokes or fingers 46a, a wire grid 68 may be used in another modified male end coupling illustrated in Figures 13 and 14. As shown, a continuous wire is bent to form a pattern of alternating outer and inner obtuse angles. Outer point portions 70 of this grid extend under the horizontal flange 72 of an outer ring 74 and are spot welded thereto. The ring 74 is itself spot welded to the outer wall 28. The inner point portions 76 of the grid are similarly spot welded to a horizontal flange portion 78 on the upper edge of the inner wall member 26. The wire for the grid may be a relatively stiff but slender material (e.g. stainless steel) and since it comprises a very small amount of heat conductor, it, like the metal fingers or spokes 46 and 46a allows only an insignificant amount of conductive heat transfer from the inner wall to the outer wall of the chimney section.

At the female end of each chimney section 20, its inner wall 26 has a cylindrical shape with a constant diameter and terminates with a plain edge. The outer wall 28 is formed with an annular indentation or groove 80 similar to the male end groove 44. Below this latter groove is a skirt portion 82 whose diameter is somewhat greater but whose length is only slightly less than the short upper end portion 36 of the male coupling. Retained by the inwardly projecting bead that forms the groove 80 is a wire or molded plastic ring 84 to which is attached a flexible annular end retainer or cover member 86. The wire or molded plastic ring has a diameter only slightly less than the inside diameter of the outer wall 28 so that it can be readily snapped into place and secured by the projecting bead 80. The outer edge of flexible cover member 86 is integral with the plastic ring or is fastened to the wire ring by looping it around and attaching it, as by heat sealing or an adhesive, back to the flexible material near the inside of the ring. The end cover member is preferably made from a relatively thin, nonmetallic material, such as a suitable sheet plastic material, and though flexible, it has a degree of tensile strength which helps to retain the insulation material within the annular cavity of the chimney section during shipment and storage.

A somewhat modified end retainer 86a, as shown in Figure 15, comprises an annular shaped, flexible plastic member with an integral right angle portion along its outer edge including a radially extending flange portion 84a of somewhat increased thickness that fits over the bead 80 and serves the same function as the ring 84.

Yet another form of end retainer, designated by numeral 86b, is shown in Figure 16. This embodiment comprises an annular plug member that is more rigid and considerably thicker than the previously described female end retainer. This annular plug is preferably made from compressed fibrous or blanket type insulation material of the well known type. It also has a notched-out portion along its outer edge to form a flange 84b that fits over the outer wall bead 80.

All of the aforementioned end covers are either flexible or movable, so that when the male and female end portions of adjoining chimney sections are connected together, the insulation material in both sections will become packed closely together to provide insulation continuity and good gas sealing at all chimney section joints.

After the chimney sections are installed, the retainer members 86 or 86a of the female section, as well as the annular retainer wafer 54 of each male retainer, may become essentially dissolved or consumed by the normal heat generated within the chimney. This enables the insulation material of adjoining sections to merge even closer together around the spider spokes or grid and essentially form a continuous insulation body at adjoining chimney sections and ensures an effective gas seal.

In manufacturing each chimney section, the inner and outer wall members 26 and 28 are formed and connected by the spider 32 of the male coupling and the annular wafer 54 inserted before the annular cavity is filled with insulation material 30 using an auger-type filler or feeder. Once filled, the chimney section is closed at its female coupling end by installation of the wire or plastic molded ring 84 and the attached flexible cover member 86. This installation is performed simply by pressing the assembly progressively under the bead member that forms the groove 80. The inner edge 88 of the cover member remains free but will turn down and lie against the inner wall member 26.

Now, when the male coupling is forced into the female coupling, as shown in Figures 7 and 11, the flexible annular retainer member 86 is pushed upwardly against the insulation material and becomes flush with the spider member on the male end of the coupling section. Along the inner wall the lower end portion of the female lower wall portion slides adjacent the upper end portion 42 of the male inner wall and is stopped by the bead member 80. Thus, only a relatively thin laminated structure comprising the wafer 54, the spider and the retainer member 86 is formed between the tightly packed insulation of the adjoining chimney sections. The plastic material of the end retainers 54 and 86 is normally consumed by chimney heat. Thereafter the insulation of adjoining sections is substantially continuous and forms an effective gas seal, and the only conductive heat transfer that can occur between the inner and outer walls is through the thin, narrow spokes 46 and 46a or the wire grid 68 of the spider member. Since this volume of metal material is relatively small, the resultant heat transfer is minimal and the problem of excessive temperature rise or hot spots on the outer wall is eliminated.

In a typical chimney installation, once the chimney sections 20 are coupled together, they are secured by a connecting exterior band 90, as shown in Figure 8. This band has a channel shaped cross section with upper and lower flanges 92 that fit within the grooves 44 and 80. At the ends of the band are outwardly projecting flanges or tabs 94 which are drawn together by a take-up screw 96 that extends through an enlarged opening 98 in one tab and is threaded into another opening 100 in the other tab. When tightened in place, the band 90 affords increased strength and rigidity to the chimney structure.

As stated previously, when installed, the assembled chimney may be readily attached to and supported by adjacent building structure, as shown in Figures 1 and 2. To facilitate the attachment of supporting brackets, one chimney section 20a may be provided with one or more outwardly projecting beads 102 spaced from its opposite ends. One of these beads serves to retain a two-piece external band 104 which extends around the chimney section and is clamped together by bolts 106 that are seated in outwardly projecting lug portions 108. Extending outwardly from each lug portion at opposite sides of the chimney is an attaching bolt 110 to which a horizontal bracket member 112 may be adjustably connected. A flange 114 on the end of each bracket member can be readily fixed to adjacent building structure 116. An additional supporting bracket 118 may also be connected to each attaching bolt 110 and extend diagonally upward or downward to be also fixed to the building structure. Other similar forms of support brackets may be used where necessary to support the assembled chimney.

In every chimney installation, the lowermost chimney section of an upright stack must be provided with a suitable means for closing off its lower end and retaining the insulation material in place. As shown in Figure 4, this closure comprises an annular basecap 120 formed of sheet metal and supported on a rigid base plate 122 that can be readily secured to available building structure. The annular ring has a cylindrical outer wall 124 that is integral with a horizontal portion 126 adapted to rest on the base plate. Another integral portion 128 with the horizontal portion extends upwardly and inwardly therefrom and then horizontally toward the inner pipe wall, thereby covering the annular cavity between the walls of the chimney section. The cylindrical outer wall 124 is of a diameter to fit closely within the lower portion of the outer wall 28 of the chimney section 20 and it may be held in place by a circumferential metal band similar to the exterior band 90.

Thus, as described, a chimney comprised of the prefabricated sections 20 not only has structural integrity and is easy to assemble and install, but also provides a high order of insulation efficiency even at the coupling joints.

## Claims

1. A prefabricated double-walled chimney section adapted to be connected to a similar section in a chimney column, said section comprising: a cylindrical inner imperforate wall member (26); a cylindrical outer wall member (28) having a greater diameter than and spaced radially outwardly from said inner wall member, thereby forming an annular cavity for a quantity of insulation material (30) between said inner and outer wall members; male coupling means (22) at one end of said section; female coupling means (24) at the other end of said section including a recess defined between spaced apart end portions of said wall members for receiving said male coupling means, an annular retainer member (86) extending between said spaced apart end portions for holding said insulation in place between said inner and outer wall members, and means (80) in said outer wall member for holding said retainer member against the end of the insulation material between said wall members, characterised in that said male coupling means include a plurality of relatively narrow and rigid structural members (46, 46a, 68) attached to and extending between end portions of said inner and outer wall members, and in that said annular retainer member is partially movable and is made of a material of relatively low heat conductivity.

2. A double-walled chimney section according to claim 1 wherein, at the female coupling end, the means (80) for holding said retainer member comprises at least one formation affording an inwardly projecting bead spaced from the end of said outer wall member and also affording a corresponding groove for use in securing connected chimney sections.

3. A double-walled chimney section according to claim 1 or claim 2, wherein said male coupling further comprises an annular wafer (54) of thin nonmetallic material adjacent the underside of said narrow structural members to help retain said insulation material within said section.

4. A double-walled chimney section according to any preceding claim wherein said male coupling includes an annular metal spider (32) having inner and outer portions (52, 50) fixed to the upper edges of said inner and outer wall members respectively.

5. A double-walled chimney section according to any preceding claim wherein at least a major part of said annular retainer member for said female coupling and/or said annular wafer is of such a constitution as to be normally consumed by heat present in said insulation material during normal operation of a chimney incorporating said chimney section.

6. A double-walled chimney section as claimed in claim 2 or any of claims 3 to 5 when dependent on claim 2, wherein a further formation is provided affording, on the exterior of said outer wall, adjacent the male coupling end, an annular groove (44), whereby two identical such chimney section can be coupled together male end to female end and held together by a circumferential band (90) having respective flanges (92) engaged in said groove adjacent the female end of the chimney section with which the male end of the other chimney section is engaged, and in said annular groove adjacent the male coupling end of the said other chimney section.

7. A chimney installation comprising: a plurality of prefabricated chimney sections (20) connected end-to-end and supported by an adjacent building structure, each of said sections comprising: an inner wall (26) and an outer wall (28) spaced outwardly therefrom and forming an annular cavity filled with insulation material (30); a male coupling (22) at one end of each section; a female coupling (24) at the other end of each section having an annular retainer member (86) covering said insulation material; said male coupling of each chimney being seated within the female coupling of the adjacent section at each junction of two aligned sections, characterised in that said male coupling includes a plurality of relatively narrow structural members (46, 46a, 68) fixed to and extending between the end edges of said inner and outer walls, said annular retainer member being of a material of relatively low heat conductivity, said male coupling being situated so that said narrow structural members of the male coupling are directly adjacent the annular retainer member of said female coupling whereby a path of relatively low heat conducting capacity, afforded principally by said narrow spaced apart structural members, is provided for the flow of heat from the inside wall of the chimney to its outside wall.

8. A chimney according to claim 7 including an annular base cap (120) extending between the inner and outer walls of the lower-most prefabricated section for said chimney, and means (122) for retaining said base cap so that no insulation material can escape from the section.

9. A chimney according to claim 8 wherein said base cap (12) has a cylindrical outer wall portion (124) that fits inside of and adjacent to a lower outer wall portion of the section and which is integral with and is positioned at a right angle to an annular portion (128) in a plane perpendicular to the axis of the section.

10. A chimney according to claim 9 wherein said means for retaining said base cap comprises a base plate (122) extending under said base cap and attached to its annular portion by fasteners.

**Patentansprüche**

1. Vorgefertigter doppelwandiger Kaminabschnitt, geeignet ausgestaltet zu einer Verbindung mit einem ähnlichen Teil in einer Kaminsäule, aufweisend: Ein zylindrisches, inneres, undurchlöchertes Wandteil (26), ein zylindrisches und äußeres Wandteil (28), das einen größeren Durchmesser aufweist als dieses und sich außerhalb und mit radialem Abstand zu dem inneren Wandteil befindet, wodurch ein kreisringförmiger Hohlraum zwischen den inneren und den äußeren Wandteilen für Isolationsmaterial gebildet wird; weiter aufweisend Innenmuffenverbindungsmittel (22) an einem Endbereich des Abschnitts, Außenmuffenverbindungsmittel am anderen Endbereich des Abschnitts einschließlich eines Einschnittes, der zwischen mit Abstand befindlichen Endbereichen der Wandteile gebildet ist, zur Aufnahme des Innenmuffenverbindungsmittels, ein kreisringförmiges Rückhalteteil (86), das sich zwischen den beabstandeten Endbereichen erstreckt, zur Halterung der Isolation an einem Ort zwischen den inneren und äußeren Wandteilen und Mitteln (80) in dem äußeren Wandteil zur Halterung des Rückhalteteils gegen das Ende des Isolationsmaterials zwischen den Wandteilen, dadurch gekennzeichnet, daß das Innenmuffenverbindungsmittel aus einer Mehrzahl von relativ engen und starren Konstrukturteilen (46, 46a, 68) besteht, angefügt an Endbereiche, und sich zwischen diesen erstreckend, der inneren und der äußeren Wandteile, und daß das kreisringförmige Zurückhalteteil teilweise bewegbar ist und aus einem Werkstoff mit relativ geringer Wärmeleitfähigkeit gefertigt ist.

2. Doppelwandiger Kaminabschnitt nach Anspruch 1, bei dem, an dem Außenkupplungsende, die Mittel (80) zur Halterung des Rückhalteelements zumindest aus einer Ausbildung bestehen, die zu einer nach innen vorstehenden Bördelkante, mit Abstand von dem Ende des äußeren Wandelementes, beiträgt und genauso beiträgt zu einer entsprechenden Ausnehmung, zur Verwendung bei einer Sicherung von verbundenen Kaminabschnitten.

3. Doppelwandiger Kaminabschnitt nach Anspruch 1 oder 2, bei dem die Innenkupplung weiter aus einer kreisringförmigen Platte 54 aus dünnem, nicht metallischem Material besteht, angrenzend an die Unterseite dieser engen Strukturelemente, um zu helfen, das Isolationsmaterial innerhalb des Abschnittes zu halten.

4. Doppelwandiger Kaminabschnitt nach einem der vorstehenden Ansprüche, bei dem die Innenkupplung eine kreisringförmige Metallspinne (32) aufweist, die über innere und äußere Bereiche (52, 50) verfügt, fest verbunden mit oberen Ecken der inneren und äußeren Wandelemente.

5. Doppelwandiger Kaminabschnitt nach einem der vorstehenden Ansprüche, bei dem zumindest ein großer Teil des kreisringförmigen Zurückhalteelementes für die Außenkupplung und/oder die kreisringförmige Platte von einer solchen Ausbildung ist, daß sie normalerweise durch die Hitze verbraucht wird, die sich in dem Isolationsmaterial bei normalen Betriebsbedingungen eines Kamines befindet, von dem der Kaminabschnitt ein Teil ist.

6. Doppelwandiger Kaminabschnitt nach Anspruch 1 oder einem der Ansprüche 3 bis 5, sofern sie von Anspruch 2 abhängig sind, bei dem weiter eine Ausbildung vorgesehen ist, die, an dem äußeren der Außenwand, angrenzend an das Innenkupplungsende, zu einer kreisringförmigen Ausnehmung (44) beiträgt, wobei zwei solche übereinstimmenden Kaminabschnitte miteinander verbunden werden können, Innenende mit Außenende, und zusammengehalten werden durch eine am Umfang umgebende Bandage (90), die jeweilige Flanschbereiche (92) aufweist, die mit der Ausnehmung zusammenwirken, angrenzend an das Außenende des Kaminabschnittes mit dem das Innenende des anderen Kaminabschnittes zusammenwirkt, und zusammenwirkend mit der kreisringförmigen Ausnehmung, die an das Innenkupplungsende des anderen Kaminabschnittes angrenzt.

7. Eine Kamininstallation, die aufweist: Eine Vielzahl von vorgefertigten Kaminabschnitten (20), die jeweils an ihren Enden verbunden sind und an einer angrenzenden Gebäudestruktur abgestützt sind, wobei jeder der Kaminabschnitte aufweist: Eine innere Wand (26) und eine äußere Wand (28), die außen und mit Abstand von dieser sich befindet und einen kreisringförmigen Hohlraum bildet, der mit Isolationsmaterial (30) angefüllt ist; eine Innenkupplung (22) an einem Ende von jedem Abschnitt; eine Außenkupplung (24) an dem anderen Ende eines jeden Abschnittes, die ein kreisringförmiges Rückhalteelement (86) besitzt, das das Isolationsmaterial abdeckt; wobei die Innenkupplung eines jeden Kamins innerhalb der Außenkupplung eines jeden angrenzenden Abschnittes sitzt an jeder Verbindungsstelle von zwei hintereinander befindlichen Abschnitten, dadurch gekennzeichnet, daß die Innenkupplung aus einer Vielzahl von relativ engen Strukturelementen (46, 46a, 68) besteht, die an Endecken befestigt sind und sich zwischen diesen erstrekken, der inneren und der äußeren Wände, wobei das kreisringförmige Rückhaltelement aus einem Werkstoff von relativ geringer Wärmeleitfähigkeit besteht, die Innenkupplung so angeordnet ist, daß die engen Strukturelemente der Innenkupplung direkt anliegend an dem kreisringförmigen Rückhalteelement der Außenkupplung sind, wobei ein Weg von relativ geringer Wärmeleitungskapazität, wie er im Prinzip durch die engen, beabstandeten Strukturelemente gegeben ist, vorgesehen ist, für einen Wärmefluß von der Innenseite der Kaminwand zu dessen Außenseite.

8. Kamin nach Anspruch 7, umfassend eine kreisringförmige Grundkappe (120), die sich zwischen den inneren und äußeren Wänden des untersten vorgefertigten Abschnittes für den Kamin erstreckt, und Mitteln (12) zur Zurückhaltung dieser Grundkappe, so daß aus diesem Abstand kein Isolationsmaterial entweichen kann.

9. Kamin nach Anspruch 8, bei dem diese Grundkappe (12) einen zylindrischen äußeren Wandbereich (124) aufweist, der mit einer Innenseite und angrenzend an einen unteren äußeren Wandbereich des Abschnittes anschließt und der einstückig mit und in einem rechten Winkel zu einem kreisringförmigen Bereich (128) positioniert ist, in einer Ebene rechtwinklig zu der Achse des Abschnittes.

10. Kamin nach Anspruch 9, bei dem die Mittel zur Zurückhaltung der Grundkappe aus einer Grundplatte (122) bestehen, die sich unterhalb dieser Grundkappe erstreckt und durch Befestigungselemente an ihrem kreisringförmigen Abschnitt angebracht ist.

## Revendications

1. Section de cheminée préfabriquée à double paroi, conçue pour être raccordée à une section analogue dans une colonne de cheminée, cette section comprenant: une portion de paroi intérieure cylindrique, non perforée (26); une portion de paroi extérieure cylindrique (28) ayant un diamètre plus grand que, et espacée radialement vers l'extérieur de la portion de paroi intérieure, formant ainsi une cavité annulaire pour recevoir une certaine quantité de matériau d'isolation (30) entre les portions de parois intérieure et extérieure; un raccord mâle (22) à une extrémité de la section; un raccord femelle (24) à l'autre extrémité de la section, comprenant une cavité délimitée par les extrémités espacées des portions de parois, pour recevoir le raccord mâle, une pièce de retenue annulaire (86) s'étendant entre ces extrémités espacées pour maintenir le matériau d'isolation en place entre les portions de parois intérieure et extérieure, et des moyens (80) fixés sur la portion de paroi extérieure pour maintenir la pièce de retenue contre l'extrémité du matériau d'isolation entre les portions de parois, caractérisée en ce que le raccord mâle comprend une pluralité d'organes structurels (46, 46a, 68) rigides et relativement étroits, fixés aux extrémités des portions de parois intérieure et extérieure, et s'étendant entre elles, et en ce que la pièce de retenue annulaire est partiellement mobile et est faite d'un matériau à relativement faible conductivité de la chaleur.

2. Section de cheminée à double paroi conforme à la revendication 1, dans laquelle, à l'extrémité du raccord femelle, les moyens (80) de maintien de la pièce de retenue comprennent au moins une forme réalisant un bourrelet en saillie intérieure, espacé de l'extrémité de la portion de paroi extérieure, et réalisant aussi une gorge correspondante utilisée pour la fixation entre elles des sections de cheminée raccordées.

3. Section de cheminée à double paroi conforme à la revendication 1 ou la revendication 2, dans laquelle le raccorde mâle comprend de plus une plaque annulaire mince (54) de matériau non métallique, adjacente au-dessous des organes structurels étroits, pour aider à la retenue du matériau d'isolation à l'intérieur de la section.

4. Section de cheminée à double paroi, conforme à l'une des revendications précédentes, dans laquelle le raccord mâle comprend une armature métallique annulaire (32) possédant des parties intérieure et extérieure (52, 50) respectivement fixées aux bords supérieurs des parties de parois intérieure et extérieure.

5. Section de cheminée à double paroi, conforme à l'une des revendications précédentes, dans laquelle la plus grande partie au moins de la pièce de retenue annulaire du raccord femelle et/ou de la plaque annulaire est constituée de telle sorte qu'elle soit normalement consumée par la chaleur présente dans le matériau d'isolation au cours de l'utilisation normale d'une cheminée incorporant la section de cheminée.

6. Section de cheminée à double paroi conforme à la revendication 2, ou à l'une des revendications 3 à 5 prise dans sa dépendance à la revendication 2, dans laquelle un formage supplémentaire réalisée, sur la face externe de la paroi extérieure, adjacente au raccord mâle, une gorge annulaire (44), permettant le raccordement de deux sections de cheminée identiques, extrémité mâle contre extrémité femelle, et leur fixation l'une à l'autre par un collier circulaire (90) muni de brides respectives (92) engagées dans la gorge adjacente à l'extrémité femelle de la section de cheminée dans laquelle l'extrémité mâle de l'autre section de cheminée est engagée, et dans la gorge annulaire adjacente à l'extrémité de raccord mâle de l'autre section de cheminée.

7. Cheminée comprenant: une pluralité de sections de cheminée préfabriquées (20) raccordées bout à bout et soutenues par une structure de bâtiment adjacente, chaque section comprenant: une paroi intérieure (26) et une paroi extérieure (28) espacée vers l'extérieur de celle-ci et formant une cavité annulaire remplie de matériau d'isolation (30); un raccord mâle (22) à l'une des extrémités de chaque section; un raccord femelle (24) à l'autre extrémité de chaque section, muni d'une pièce de retenue annulaire (86) couvrant le matériau d'isolation; le raccord mâle de chaque section étant monté à l'intérieur du raccord femelle de la section suivante à chaque jonction de deux sections alignées, caractérisé en ce que le raccord mâle comprend une pluralité d'organes structurels (46, 46a, 68) relativement étroits fixés à et s'étendant entre les bords extrêmes des parois intérieure et extérieure, la pièce de retenue annulaire étant faite d'un matériau à conductivité de la chaleur relativement faible, le raccord mâle étant placé de sorte que les organes structurels étroits du raccord mâle soient directement adjacents à la pièce de retenue annulaire du raccord femelle, de sorte qu'un chemin de relativement faible conduction de la chaleur, permise principalement par les organes structurels étroits et espacés soit offert au flux de chaleur allant de la paroi intérieure à la paroi extérieure de la cheminée.

8. Cheminée conforme à la revendication 7, comprenant un capot annulaire de base (120) s'étendant entre les parois intérieure et extérieure de la plus basse section préfabriquée de la cheminée, et des moyens (122) pour maintenir ce capot de base de sorte que du matériau d'isolation ne puisse pas s'échapper de la section.

9. Cheminée conforme à la revendication 8, dans laquelle le capot de base (120) est muni d'une portion de paroi cylindrique extérieure (124) qui s'adapte à l'intérieur de, et de façon adjacente à une portion de paroi extérieure inférieure de la section, et qui est en une seule pièce avec, et est positionnée à angle droit, par rapport à une portion annulaire (128) disposée dans un plan perpendiculaire à l'axe de la section.

10. Cheminée conforme à la revendication 9, dans laquelle les moyens de retenue du capot de base comprennent une plaque de base (122) s'étendant sous le capot de base et fixée à sa portion annulaire par des attaches.

Fig .1.

Fig .3.

Fig .2.

Fig .4.

Fig.7.

Fig.5.

Fig.6.

Fig.8.

Fig.9.

Fig.10.

Fig.11.

Fig.12.

Fig.13.

Fig.15.

Fig.14.

Fig.16.